# EUROPÄISCHE PATENTSCHRIFT

(11) **EP 2 243 529 B1**
(45) Veröffentlichungstag und Bekanntmachung des Hinweises auf die Patenterteilung: **08.08.2012**
(21) Anmeldenummer: 09158696.6
(22) Anmeldetag: 24.04.2009
(51) Int. Cl.: B01D 3/00

(54) **Fluideintrittsvorrichtung**
Fluid entry device
Dispositif d'entrée de fluide

(43) Veröffentlichungstag der Anmeldung: 27.10.2010
(73) Patentinhaber: Sulzer Chemtech AG, 8404 Winterthur (CH)
(72) Erfinder: Schaeffer, Pierre, 8409, Winterthur (CH); Fehr, Emil, 8415, Berg am Irchel (CH); Leuppi, Stefan, 8409, Winterthur (CH)
(74) Vertreter: Sulzer Management AG

(56) Entgegenhaltungen:
- WO-A-2005/058503
- DE-A1-102006 049 195
- GB-A- 1 119 699
- US-A1- 2009 078 118

## Beschreibung

Die Erfindung betrifft eine Fluideintrittsvorrichtung für einen Stoffaustauschapparat. Eine derartige Fluideintrittsvorrichtung ist geeignet, um eine Mischung eines Gases und einer Flüssigkeit in den Stoffaustauschapparat einzubringen.

Eine derartige Fluideintrittsvorrichtung ist bereits aus der W02006122940 bekannt. Die dort gezeigte Fluideintrittsvorrichtung, für den Eintrag eines Gemisches einer Flüssigkeit und eines Gases in eine Kolonne umfasst einen Strömungskanal, der ein Einlassende aufweist, um die Mischung aus Flüssigkeit und Gas aufzunehmen. Dieser Strömungskanal enthält eine Mehrzahl von gekrümmten Leitelementen, die hintereinander im Strömungskanal angeordnet sind. Jedes Leitelement weist einen fluidaufnehmenden Teil auf, der in den Strömungskanal hineinragt und einen nach aussen gerichteten gekrümmten Teil. Die gekrümmten Teile benachbarter Leitelemente bilden einen Auslasskanal aus. Am Ende des Auslasskanals bildet der gekrümmte Teil einen Flüssigkeitsauffangkanal aus.

Dieser Flüssigkeitsauffangkanal dient dazu, die Flüssigkeit aus dem Gemisch zu sammeln und vom Gas zu trennen. Hierbei hat sich gezeigt, dass ein erneutes Mitreissen bereits abgeschiedener Flüssigkeit verhindert werden kann, wenn der Flüssigkeitsauffangkanal relativ zu der vertikalen Kolonnenachse geneigt ausgeführt ist.

Aufgabe der Erfindung ist daher, den Druckverlust der Fluideintrittsvorrichtung so gering wie möglich zu halten wobei gleichzeitig das Mitreissen von Flüssigkeit im Gasstrom vermieden oder zumindest signifikant vermindert werden kann.

Diese Aufgabe wird durch eine Fluideintrittsvorrichtung gelöst, die Fluideintrittsvorrichtung für einen Stoffaustauschapparat, der einen von der Umgebung abgeschlossenen Innenraum aufweist, umfassend einen Kanal zur Förderung eines Fluids in den Innenraum des Stoffaustauschapparats, wobei das Fluid ein Gas und eine Flüssigkeit enthält, wobei der Kanal eine Mehrzahl von Leitelementen umfasst, sodass mittels eines jeden Leitelements ein Teilstrom des Fluids erzeugbar ist, der über das Leitelement in den Innenraum lenkbar ist, wobei das Leitelement ein erstes Ende umfasst, welches als ein Umlenkelement ausgebildet ist, um den Teilstrom des Fluids aus dem Kanal abzuzweigen und ein zweites Ende aufweist, welches gegenüberliegend zum ersten Ende angeordnet ist, wobei das Fluid vom ersten Ende zum zweiten Ende strömt, das Leitelement eine Luvseite und eine Leeseite aufweist, wobei am zweiten Ende ein Auffangelement vorgesehen ist, welches dadurch gekennzeichnet ist, dass das Auffangelement derart um das zweite Ende angeordnet ist, dass eine Öffnung zwischen der Luvseite und dem Auffangelement ausgebildet ist, wobei an die Öffnung ein bogenförmiger Abschnitt anschliesst und an den bogenförmigen Abschnitt ein Abschnitt, welcher auf der Leeseite mit dem zweiten Ende verbunden ist und der Abschnitt mit dem zweiten Ende einen Winkel einschliesst.

Der Winkel ist insbesondere als spitzer Winkel ausgebildet. Der Winkel beträgt 30° bis 75°, besonders bevorzugt 40° bis 60°.

Der Abschnitt, welcher an den bogenförmigen Abschnitt anschliesst, kann insbesondere eben ausgebildet sein. Nach einer alternativen Ausführungsform kann der Abschnitt auch eine konkave Krümmung seiner Aussenfläche aufweisen. Die Aussenfläche ist die von der Leeseite abgewandte Fläche des Abschnitts.

Der bogenförmige Abschnitt verläuft um das zweite Ende des Leitelements in einem Radius. Der Radius des bogenförmiges Abschnitts beträgt maximal das 5-fache, vorzugsweise maximal das 3-fache der Wandstärke des zweiten Endes des Leitelements.

Der bogenförmige Abschnitt weist eine Eintrittskante auf. Durch die Eintrittskante wird das Fluid, welches entlang der Luvseite strömt in einen Gasstrom geteilt, der ausserhalb des bogenförmigen Abschnitts strömt und einen Flüssigkeitsstrom, der durch den Spalt zwischen der Eintrittskante und dem zweiten Ende des Leitelements strömt. Der Spalt ist somit als Abstand zwischen der Eintrittskante und dem zweiten Ende des Leitelements ausgebildet. Der Abstand zwischen der Eintrittskante des bogenförmigen Abschnitts und dem zweiten Ende des Leitelements beträgt maximal das 3-fache der Wandstärke des zweiten Endes des Leitelements, vorzugsweise maximal das einfache der Wandstärke dieses zweiten Endes.

Das Auffangelement ist mit dem Leitelement entlang eines Verbindungsstücks verbunden.

Zumindest durch den bogenförmigen Abschnitt des Auffangelements ist ein Hohlraum ausgebildet, wobei das zweite Ende sich über das Verbindungsstück in den Hohlraum erstreckt.

Zwischen dem bogenförmigen Abschnitt und der Öffnung ist ein zweiter Abschnitt angeordnet. Die Öffnung kann insbesondere als Schlitz ausgebildet sein.

Der Kanal ist vorzugsweise derart angeordnet, dass durch den Kanal der Innenraum des Stoffaustauschapparats in einen ersten Teilbereich und einen zweiten Teilbereich geteilt wird Der erste Teilbereich und der zweite Teilbereich befinden sich ausserhalb des Kanals. Der Stoffaustauschapparat ist im ersten und zweiten Teilbereich frei von Einbauten, sodass der erste Teilbereich und der zweite Teilbereich Öffnungen ausbilden, durch welche ein im Innenraum des Stoffaustauschapparats strömendes Fluid ausserhalb des Kanals seitlich vorbei strömen kann. Der erste Teilbereich wird von der Innenwand des Stoffaustauschapparats sowie vom Kanal begrenzt, der zweite Teilbereich wird ebenfalls von der Innenwand des Stoffaustauschapparats sowie vom Kanal begrenzt. Insbesondere spannen der erste Teilbereich und der zweite Teilbereich zwischen der Innenwand des Stoffaustauschapparats und dem Kanal zwei gleich grosse Querschnittsflächen auf. Hierdurch wird eine gleichmässige Verteilung des im Innenraum des Stoffaustauschapparats strömenden Fluids gewährleistet.

Der Kanal weist ein Bodenelement, ein Deckenelement sowie ein erstes und ein zweites Seitenelement auf, wobei die Leitelemente an zumindest einem der Seitenelemente angeordnet sind. Durch diese Anordnung der Leitelemente wird die Trennung von Flüssigkeit und Gas aus dem Fluid, welches in den Stoffaustausch eintreten soll, ermöglicht und eine gleichmässige Verteilung des Gases im Innenraum des Stoffaustauschapparats gewährleistet.

Das zweite Ende weist nach einem bevorzugten Ausführungsbeispiel eine Aussenkante auf, die einen spitzen Winkel mit der Achse des Stoffaustauschapparats einschliesst. Der Winkel liegt zwischen 10° und 45°, vorzugsweise zwischen 25° und 30°. Das Auffangelement hat im wesentlichen dieselbe Neigung wie die Aussenkante, sodass die mit dem Fluid mitgeführte Flüssigkeit in Richtung des Bodenelements und in den darunter liegenden Innenraum des Stoffaustauschapparats geleitet wird. Wäre der Winkel 0°, das heisst, das Auffangelement ist derart angeordnet, dass der Auffangkanal vertikale Ausrichtung hat, trifft die Flüssigkeit in einem Winkel von 90° auf das Auffangelement und prallt vom Auffangelement ab. Das heisst, die Flüssigkeit bildet einen Sprühnebel im Hohlraum aus und wird von dem Gas, welches in Richtung des Deckenelements strömt, nach oben mitgerissen. Das Mitreissen von Flüssigkeit mit dem Gas kann durch die Neigung des Auffangelements verhindert werden. Gas und Flüssigkeit werden entlang des Auffangelements in Richtung des Bodenelements geleitet, wobei die Flüssigkeit sich an der Wand des bogenförmigen Abschnitts ansammelt und ein Rinnsal ausbildet oder kleine Tröpfchen an der Wand zu genügend grossen Tropfen koaleszieren, sodass ein Mitreissen mit dem Gas, welches den Stoffaustauschapparat von unten nach oben durchströmt, in stark vermindertem Ausmass auftritt.

Das zweite Ende umfasst ein erstes Teilende und ein zweites Teilende, wobei das erste Teilende sich von einem ersten Teilendpunkt zu einem zweiten Teilendpunkt erstreckt und das zweite Teilende sich von einem dritten Teilendpunkt zu einem vierten Teilendpunkt erstreckt, wobei sich zwischen dem zweiten Teilendpunkt und dem dritten Teilendpunkt eine Kante erstreckt.

Zwischen dem ersten Teilendpunkt, dem zweiten Teilendpunkt und dem dritten Teilendpunkt ist ein Dreieck ausgebildet. Um das erste und zweite Teilende ist je ein Auffangelement angeordnet.

Das Auffangelement kann durch ein Abdeckelement verschliessbar sein. Hierdurch wird vermieden, dass Flüssigkeit mit einem Sekundärstrom, welcher im Inneren des bogenförmigen Abschnitts in Richtung des Deckenelements strömt mitgerissen wird und das Auffangelement in Richtung des Kopfs des Stoffaustauschapparats verlässt.

Ein Winkel kann zwischen der Längsachse des Stoffaustauschapparats und zweitem Ende vorgesehen sein.

Das Deckenelement umfasst nach einer bevorzugten Ausführungsform eine nach oben umgebogene Seitenkante.

Ein Stoffaustauschapparat umfasst eine Fluideintrittsvorrichtung nach einem der vorhergehenden Ausführungsbeispiele. Insbesondere ist der Stoffaustauschapparat als Destillationskolonne ausgebildet.

Die Fluideintrittsvorrichtung nach einem der vorhergehenden Ausführungsbeispiele wird insbesondere für einen unter Vakuum betriebenen Stoffaustauschapparat verwendet.

Nachfolgend wird die Erfindung anhand der Zeichnungen erläutert. Es zeigen:
- Fig. 1: eine Ansicht einer Kolonne mit einer Fluideintrittsvorrichtung gemäss der Erfindung
- Fig. 2: ein Detail der Fluideintrittsvorrichtung gemäss Fig. 1
- Fig. 3: ein Detail einer Fluideintrittsvorrichtung nach einem zweiten Ausführungsbeispiel
- Fig. 4: ein Diagramm welches einen Vergleich des Anteils an mitgerissener Flüssigkeit für die erfindungsgemässe Lösung und den Stand der Technik darstellt
- Fig. 5: ein Diagramm welches einen Vergleich des Anteils an mitgerissener Flüssigkeit für die erfindungsgemässe Lösung und einer weiteren Lösung nach dem Stand der Technik darstellt
- Fig. 6: ein Diagramm welches einen Vergleich des Druckverlusts für die erfindungsgemässe Lösung und den Stand der Technik darstellt
- Fig. 7: die Abhängigkeit des Anteils an mitgerissener Flüssigkeit von dem Strömungsparameter
- Fig. 8: eine Ansicht der Fluideintrittsvorrichtung von oben ohne Deckenelement
- Fig. 9: ein Detail des Endes des Leitelements, welches das Auffangelement umfasst

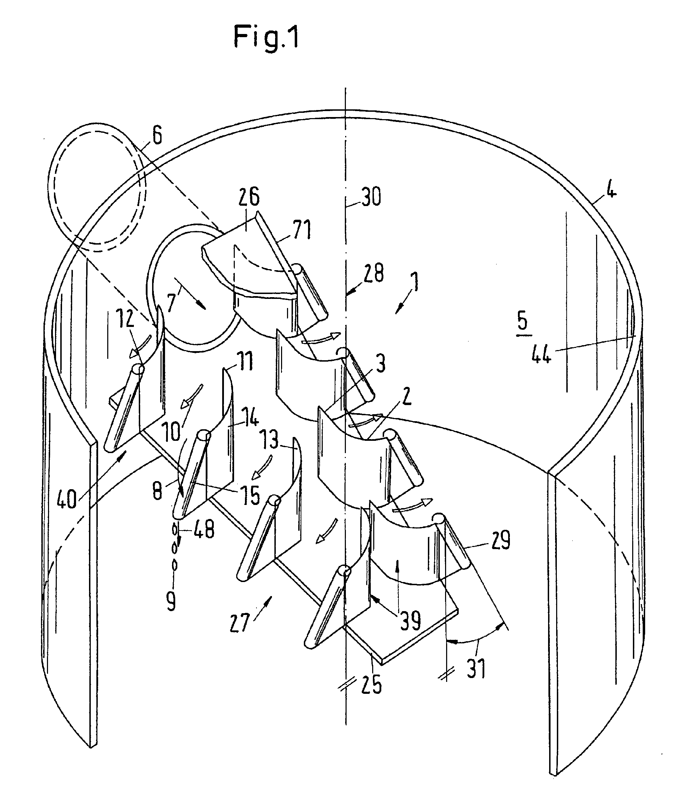

Fig. 1 zeigt eine Fluideintrittsvorrichtung 1 für einen Stoffaustauschapparat 4. Dieser Stoffaustauschapparat kann als Behälter ausgebildet sein, der einen von der Umgebung abgeschlossenen Innenraum 5 aufweist. In dem Innenraum 5 strömt ein erstes Fluid von seinem Eintritt in den Stoffaustauschapparat zum Kopf desselben. Während das Fluid durch den Stoffaustauschapparat strömt, kann es einem Stoffaustausch unterzogen werden. Zur Durchführung des Stoffaustauschs wird dieses erste Fluid mit einem zweiten Fluid in Kontakt gebracht, das den Innenraum 5 im Gegenstrom vom Kopf zum Sumpf des Stoffaustauschapparats 1 durchströmt. Das erste Fluid und das zweite Fluid kommen miteinander in Kontakt, sodass an den Kontaktstellen ein Stoffaustausch stattfindet. Die Kontaktstellen können als weitere, nicht in den Figuren dargestellte Einbauten im Innenraum des Stoffaustauschapparats 4 angeordnet sein, welche das erste Fluid und das zweite Fluid in Kontakt miteinander bringen.

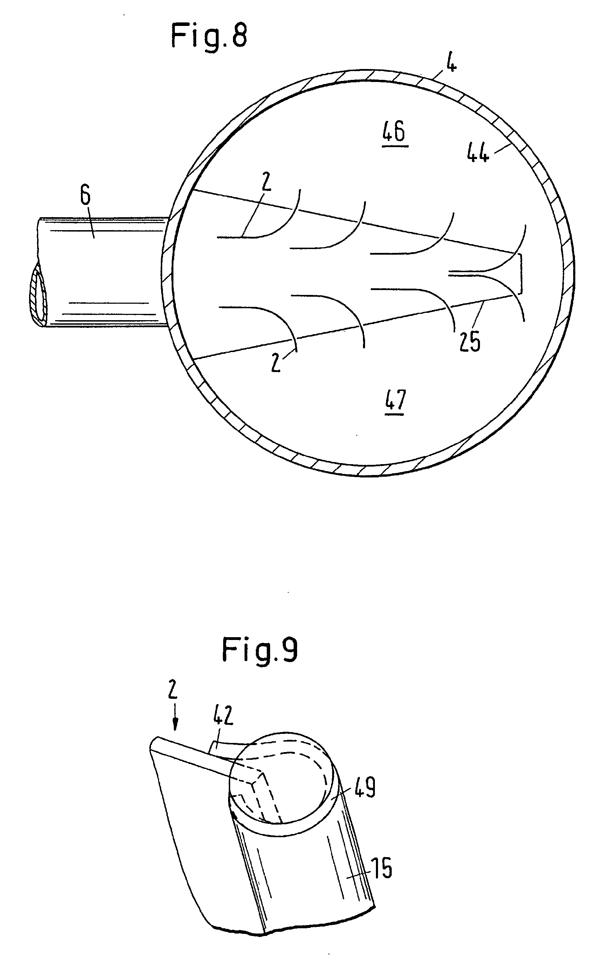

Die Fluideintrittsvorrichtung 1 für das erste Fluid, welches nachfolgend der Einfachheit halber als das Fluid 7 bezeichnet wird, kann an einem beliebigen Ort der Wand des Behälters angeordnet sein. Die Fluideintrittsvorrichtung 1 umfasst einen Kanal 6 zur Förderung eines Fluids 7 in den Innenraum 5 des Stoffaustauschapparats 4. Der Kanal 6 kann beispielsweise als ein Rohr mit zylindrischem Querschnitt ausgebildet sein. Gemäss des Ausführungsbeispiels nach Fig. 1 teilt der Kanal 6 den Innenraum 5 des Stoffaustauschapparats 4 in einen ersten Teilbereich 46 und einen zweiten Teilbereich 47 geteilt wird. Der erste Teilbereich 46 und der zweite Teilbereich 47 befinden sich ausserhalb des Kanals 6, siehe hierzu Fig. 8, welche eine Ansicht der Fluideintrittsvorrichtung 1 von oben zeigt. Der Stoffaustauschapparat 4 ist im ersten und zweiten Teilbereich 46,47 frei von Einbauten, sodass der erste Teilbereich 46 und der zweite Teilbereich 47 Öffnungen ausbilden, durch welche ein im Innenraum 5 des Stoffaustauschapparats 4 strömendes Fluid ausserhalb des Kanals 6 seitlich vorbei strömen kann. Der erste Teilbereich 46 wird von der Innenwand 44 des Stoffaustauschapparats 4 sowie vom Kanal 6 begrenzt, der zweite Teilbereich 47 wird ebenfalls von der Innenwand 44 des Stoffaustauschapparats 4 sowie vom Kanal 6 begrenzt. Insbesondere spannen der erste Teilbereich 46 und der zweite Teilbereich 47 zwischen der Innenwand 44 des Stoffaustauschapparats 4 und dem Kanal 6 zwei gleich grosse Querschnittsflächen auf. Hierdurch wird eine gleichmässige Verteilung des im Innenraum 5 des Stoffaustauschapparats 4 strömenden Fluids gewährleistet.

Die Fluideintrittsvorrichtung 1 umfasst ein Bodenelement 25, ein Deckenelement 26, sowie ein erstes Seitenelement 27 und ein zweites Seitenelement 28. Das Deckenelement 26 ist in Fig. 1 nur teilweise gezeigt, um die Sicht auf den Innenraum der Fluideintrittsvorrichtung 1 frei zu geben. Das Deckenelement 26 reicht vom Kanal 6 bis zu einem Abschlusselement 39. Das Abschlusselement 39 ist gemäss Fig. 1 von zwei Leitelementen 2 gebildet, zwischen welchen ein schmaler Spalt bestehen bleiben kann. Das Deckenelement 26, das Bodenelement 25 sowie das Abschlusselement 39 können als dünnwandige Platten ausgebildet sein, die insbesondere keine Öffnungen enthalten.

Zumindest eines der ersten oder zweiten Seitenelemente 27, 28 enthält eine Mehrzahl von Leitelementen 2. Die Seitenelemente 27, 28 können insbesondere aus einer Mehrzahl von Leitelementen 2 bestehen, wobei je zwei Leitelemente gegenüberliegend zueinander angeordnet sind. Die Leitelemente 2 sind in einem Abstand zueinander angeordnet, sodass zwischen zwei benachbarten Leitelementen 2 je ein Fluidaustrittskanal 40 gebildet wird. Mittels eines jeden Leitelements 2 ist ein Teilstrom 10 des Fluids 7 erzeugbar, der über das Leitelement 2 in den Innenraum 5 des Stoffaustauschapparats 4 lenkbar ist.

Das Fluid 7 enthält ein Gas 8 und eine Flüssigkeit 9. Die Flüssigkeit 9 kann im Gas 8 als Tröpfchen verteilt sein. Das Leitelement 2 umfasst ein erstes Ende 11, welches als ein Umlenkelement 3 ausgebildet ist, oder an welches ein Umlenkelement 3 anschliesst, um den Teilstrom 10 des Fluids 7 aus dem Kanal 6 abzuzweigen. Durch das Umlenkelement 3 kommt es zu einer Umlenkung des Teilstroms 10. Das Umlenkelement 3 kann insbesondere eines um eine vertikale Achse gekrümmtes dünnwandiges Plattenelement sein, insbesondere ein Blechelement.

Die in dem Gas 8 verteilten Tröpfchen werden entlang des Umlenkelements 3 weniger stark umgelenkt als das Gas 8, sodass in der Nähe des Leitelements auf dessen Luvseite 13 eine erhöhte Konzentration an Tröpfchen erzeugbar ist. Unter Luvseite 13 ist die der dem Teilstrom zugewandte Seite des Leitelements 2 zu verstehen. Die Leeseite 14 ist die der Luvseite 13 gegenüberliegende Seite des Leitelements 2.

Das Leitelement 2 umfasst ein zweites Ende 12, welches gegenüberliegend zum ersten Ende 11 angeordnet ist. Der Teilstrom 10 des Fluids 7 strömt vom ersten Ende 11 zum zweiten Ende 12. Am zweiten Ende 12 ist ein Auffangelement 15 vorgesehen. Dieses Auffangelement 15 dient der Aufnahme der Flüssigkeit 9 und ist derart ausgestaltet, dass der weitgehend aus dem Gas 8 bestehenden Teilstrom 10 unter möglichst geringem Druckverlust in den Innenraum 5 strömt. Ein kleiner Teil des Gases 8 strömt als Sekundärstrom 48 durch das Auffangelement 15 und verlässt es oben oder unten.

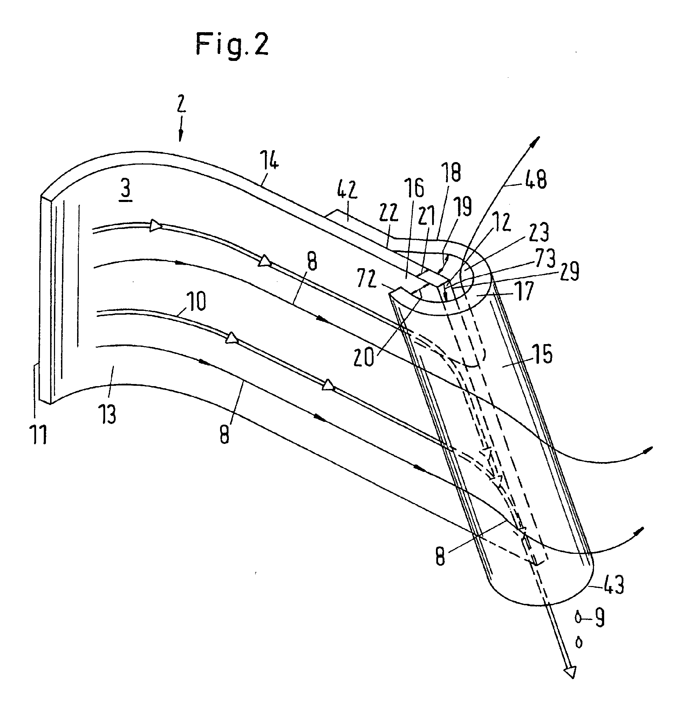

Fig. 2 zeigt eines der Leitelemente 2 nach einem ersten Ausführungsbeispiel. Das Auffangelement 15 ist derart um das zweite Ende 12 angeordnet, dass eine Öffnung 16 zwischen der Luvseite 13 und dem Auffangelement 15 ausgebildet ist. Diese Öffnung kann insbesondere als Schlitz ausgebildet sein. Das Auffangelement 15 erstreckt sich gemäss Fig. 2 über die gesamte Länge des zweiten Endes 12 des Leitelements 2. An die Öffnung 16 schliesst ein bogenförmiger Abschnitt 17 an und an den bogenförmigen Abschnitt 17 ein Abschnitt 18, welcher auf der Leeseite 14 mit dem Leitelement 2 verbunden ist. Der Abschnitt 18 schliesst mit dem zweiten Ende 12 einen Winkel 19 ein. Der Winkel 19 beträgt 30° bis einschliesslich 75°, vorzugsweise 40° bis 60°.

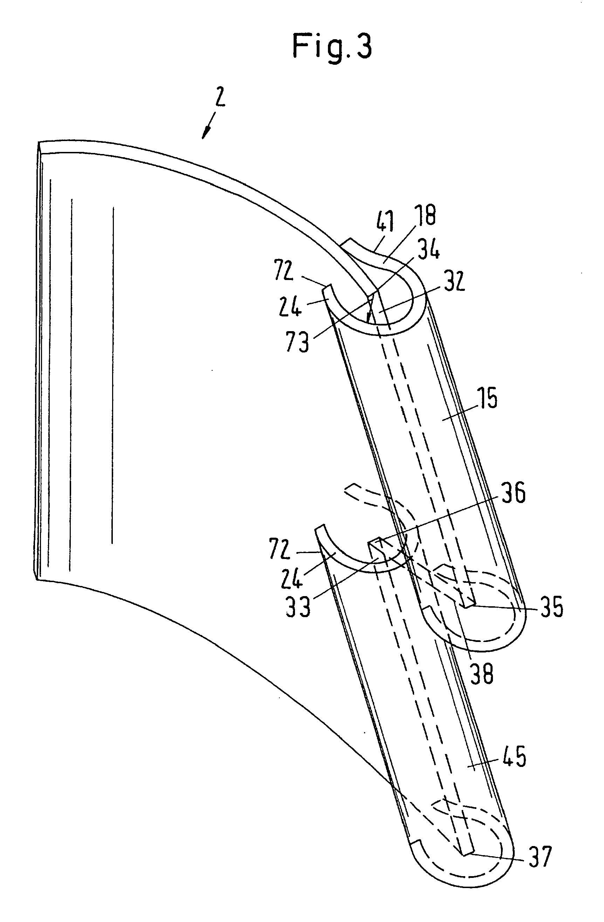

Der Abschnitt 18, welcher an den bogenförmigen Abschnitt 17 anschliesst, kann insbesondere eben ausgebildet sein. Nach einer alternativen Ausführungsform, die in Fig. 3 gezeigt ist, aber in gleicher Weise für ein Leitelement 2 gemäss Fig. 2 zum Einsatz kommen kann, kann der Abschnitt 18 auch eine konkave Krümmung seiner Aussenfläche 41 aufweisen. Die Aussenfläche 41 ist die von der Leeseite 14 abgewandte Fläche des Abschnitts 18.

Das Auffangelement 15 ist mit dem Leitelement 2 entlang eines Verbindungsstücks 22 verbunden, welches auf der Leeseite 14 angeordnet ist. Das Verbindungsstück 22 kann das Ende des Abschnitts 18 sein, welches mittels einer Schweissverbindung auf der Leeseite 14 an das Leitelement 2 angebracht ist. Das Verbindungsstück 22 kann auch einen zum Leitelement 2 parallelen Abschnitt 42 enthalten. Der parallele Abschnitt 42 ist beispielsweise über Schweisspunkte mit dem Leitelement 2 verbunden. Hierdurch kann das Leitelement 2 in seiner Konstruktion zusätzlich versteift werden.

Der bogenförmige Abschnitt 17 verläuft um das zweite Ende 12 in einem Radius 73. Der Abstand 20 zwischen der Eintrittskante 72 des bogenförmigen Abschnitts 17 und dem zweiten Ende des Leitelements 2 beträgt maximal das 3-fache der Wandstärke 21 des zweiten Endes 12, vorzugsweise maximal das einfache der Wandstärke 21 des zweiten Endes 12. Der Radius 73 des bogenförmigen Abschnitts 17 ist maximal das 5-fache, vorzugsweise maximal das 3-fache der Wandstärke 21. Der bogenförmige Abschnitt 17 muss nicht exakt ein Kreisstück sein, sondern kann aus einzelnen Kreisstücken zusammengesetzt werden. Zumindest durch den bogenförmigen Abschnitt 17 des Auffangelements 15 ist somit ein Hohlraum 23 ausgebildet, wobei sich das zweite Ende 12 über das Verbindungsstück 22 hinaus in den Hohlraum 23 erstreckt. In diesem Hohlraum 23 sammelt sich die Flüssigkeit 9 und strömt an den Wänden des Hohlraums 23 in Richtung des Bodens des Stoffaustauschapparats. Auf dem Weg durch den Hohlraum koaleszieren die Flüssigkeitströpfchen und bilden Tröpfchen grösseren Durchmessers oder bei grösserer Flüssigkeitsbeladung einen Flüssigkeitsfilm aus. Diese Tröpfchen oder der Flüssigkeitsfilm lösen sich vom unteren Ende 43 des Auffangelements und fallen weitgehend unbehelligt vom Gasstrom 8 des Teilstroms 10 in Richtung des Sumpfes des Stoffaustauschapparats, das heisst des Bodens des Behälters.

Das zweite Ende 12 weist eine Aussenkante 29 auf, die mit der Längsachse 30 des Stoffaustauschapparats einen spitzen Winkel 31 einschliesst, wie in Fig. 1 gezeigt ist. Der Winkel 31 liegt insbesondere im Bereich von 10° bis einschliesslich 45°, besonders bevorzugt im Bereich von 25° bis einschliesslich 35°.

Gemäss dem in Fig. 3 dargestellten Ausführungsbeispiel umfasst das zweite Ende 12 ein erstes Teilende 32 und ein zweites Teilende 33, wobei das erste Teilende 32 sich von einem ersten Teilendpunkt 34 zu einem zweiten Teilendpunkt 35 erstreckt und das zweite Teilende 33 sich von einem dritten Teilendpunkt 36 zu einem vierten Teilendpunkt 37 erstreckt, wobei sich zwischen dem zweiten Teilendpunkt 35 und dem dritten Teilendpunkt 36 eine Kante 38 erstreckt. Um das erste Teilende 32 und das zweite Teilende 33 ist je ein Auffangelement 15, 45 angeordnet. Jedes der Auffangelemente ist wie in Zusammenhang mit Fig. 2 beschrieben ausgestaltet. Wie bereits vorher erwähnt, weist der Abschnitt 18 des Auffangelements 15 und der entsprechende Abschnitt des Auffangelements eine Krümmung auf. Des weiteren schliesst an das Ende des bogenförmigen Abschnitts 17 auf der Luvseite 13 des Leitelements 2 noch ein ebener Abschnitt 24 an. Dieser ebene Abschnitt 24 bewirkt eine weniger abrupte Umlenkung des Gases 8, was insbesondere bei hohen Strömungsgeschwindigkeiten von Vorteil sein kann.

Zwischen dem ersten Teilendpunkt 34, dem zweiten Teilendpunkt 35 und dem dritten Teilendpunkt 36 ist ein Dreieck aufgespannt. Der Teilendpunkt 35 bildet somit eine lokale Spitze aus. Eine zweite derartige Spitze wird vom entsprechenden Teilendpunkt des Teilendes 33 gebildet.

Das zweite Ende kann eine Mehrzahl von Teilenden umfassen, insbesondere mehr als zwei Teilenden umfassen, was in den Fig. nicht zeichnerisch dargestellt ist.

Das obere Ende des Auffangelements 15 kann mittels eines Abdeckelements 49 zugedeckt sein, was in Fig. 9 dargestellt ist, um ein Ausströmen des Sekundärstroms 48 und ein unerwünschtes Ausströmen von Flüssigkeit bei hohen Gasgeschwindigkeiten in Richtung des Deckenelements 26 zu vermeiden. Das Deckenelement 26 kann alternativ oder in Ergänzung hierzu die Funktion des Abdeckelements 49 übernehmen Insbesondere kann das Deckenelement 26 Ausstülpungen umfassen, welche die Funktion eines Abdeckelements erfüllen.

Das Deckenelement 26 kann eine nach oben gebogene Seitenkante 71 umfassen. Flüssigkeit, die auf das Deckenelement 26 auftrifft wird vom Deckenelement derart abgeleitet, dass das Deckenelement 26 mit einer Neigung zur Horizontalebene eingebaut wird, sodass sich auf dem Deckenelement 26 befindliche Flüssigkeit sammeln kann und entlang der Seitenkante 49 in Richtung des Abschlusselements 39 geleitet wird, um über die oberhalb des Abschlusselements 39 befindliche Kante des Deckenelements nach unten zu fallen.

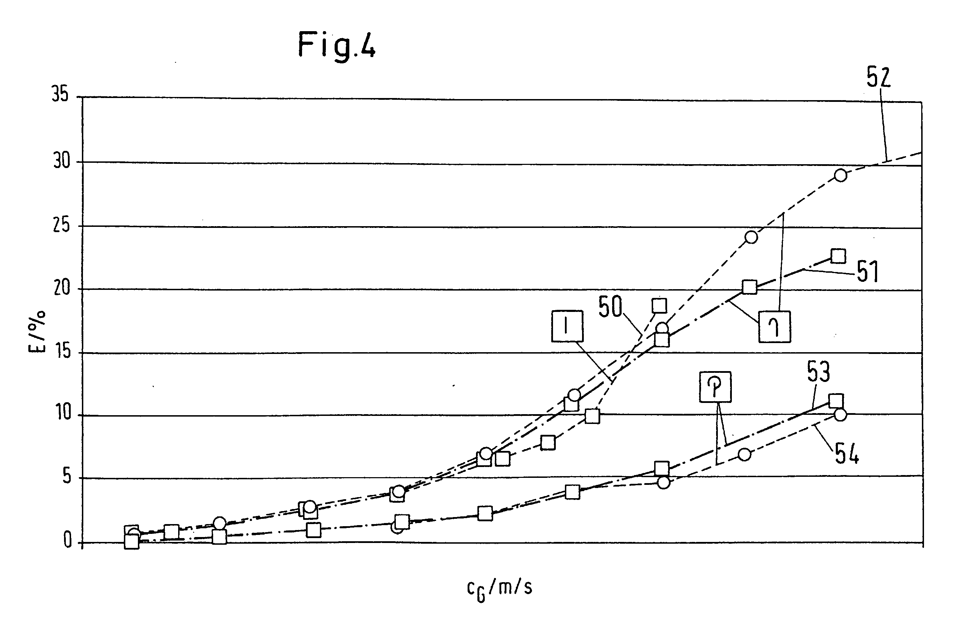

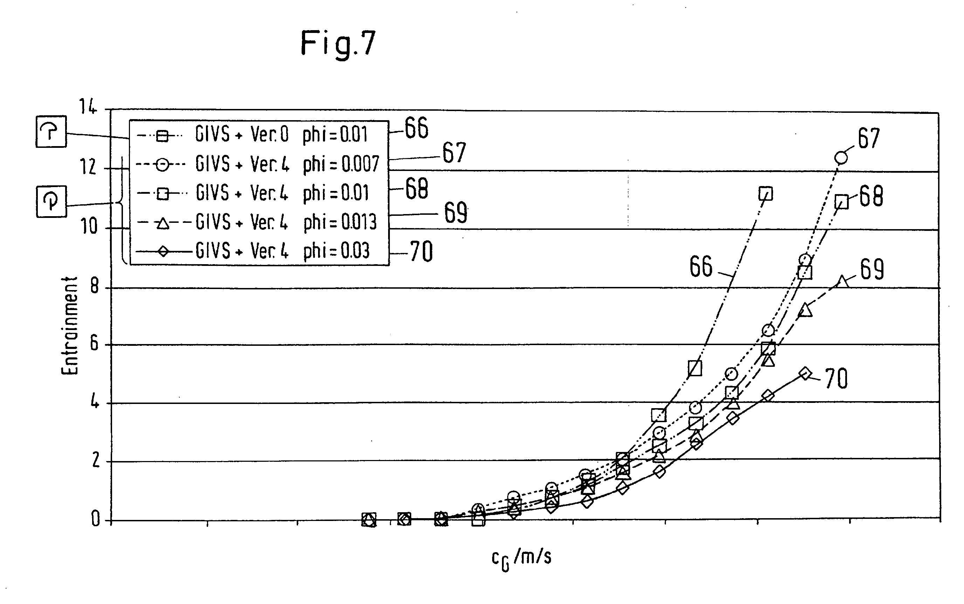

Fig. 4 zeigt einen Vergleich des Anteils an Flüssigkeit, welche vom Gas mitgerissen und über der Fluideintrittsvorrichtung gemessen wird, in Abhängigkeit von der Gasströmung für Leitelemente, welche gemäss des Standes der Technik ausgebildet sind, sowie für erfindungsgemässe Auffangelemente. Kurve 50 wurde mit einem Leitelement gemessen, welches kein Auffangelement an seinem zweiten Ende aufweist. Kurven 51 und Kurven 52 wurden mit einem Auffangelement gemäss W02006122940, Fig. 7 (Bezugszeichen 123 oder 127) gemessen. Kurven 53 und 54 wurden mit einem Auffangelement gemäss der Erfindung gemessen. Kurve 51 unterscheidet sich von Kurve 52 dahingehend, dass für den Strömungsparameter phi in Kurve 51 der Wert 0.01 und für Kurve 52 der Wert 0.007 verwendet worden ist.

Der Strömungsparameter phi ist ein Mass für den Flüssigkeitsgehalt im Gasstrom. Dieser Strömungsparameter ist eine dimensionslose Kennzahl, die das Verhältnis des Massenstroms an Flüssigkeit geteilt durch die Wurzel der Dichte der Flüssigkeit zu dem Massenstrom des Gases geteilt durch die Wurzel der Dichte des Gases beschreibt. Er ist auch als Wurzel des Verhältnisses der kinetischen Energie des Flüssigkeitsstroms zur kinetischen Energie des Gasstroms zu verstehen. Weil die Gasdichte stark druckabhängig ist, werden durch den Strömungsparameter die Druckverhältnisse in der Fluideintrittsvorrichtung mit berücksichtigt. Es hat sich gezeigt, dass bei einem kleinen Strömungsparameter das Geschwindigkeitsfeld des Gases von der Flüssigkeit unbeeinträchtigt bleibt.

Auf der x-Achse ist der Souders-Brown-Koeffizient des Gases in m/s aufgetragen. Dieser Koeffizient ist ein Mass für die mittlere Gasgeschwindigkeit im Stoffaustauschapparat 4 und berechnet sich als Produkt der mittleren Querschnittsgeschwindigkeit mal der Wurzel aus der Gasdichte dividiert durch die Wurzel aus der Dichtedifferenz zwischen Flüssigkeit 9 und Gas 8. Auf der y-Achse ist der Anteil an Flüssigkeit, die vom Gasstrom mitgerissen worden ist, in % angegeben. Je kleiner dieser Wert ist, umso wirksamer scheidet die Fluideintrittsvorrichtung 1 die Flüssigkeit ab.

Hieraus ergibt sich einerseits deutlich, dass es kaum einen Unterschied macht, ob am zweiten Ende des Leitelements kein Auffangelement angebracht ist, wie in Kurve 50 gezeigt, oder ob ein Auffangelement nach dem Stand der Technik verwendet wurde, wie in Kurven 51 und 52 gezeigt ist. Wird allerdings ein Auffangelement gemäss der Erfindung eingesetzt, ist ein überraschend deutlicher Rückgang des Anteils an mitgerissener Flüssigkeit festzustellen, wie Kurven 53 und 54 belegen.

Dieser Rückgang scheint zudem weitgehend unabhängig von dem tatsächlichen Anteil an Flüssigkeit im Gas zu sein, wie die Messungen bei den zwei verschiedenen Strömungsparametern zeigen. Der Strömungsparameter hat somit im Verglich zur konstruktiven Ausgestaltung des Abstandselements nur untergeordneten Einfluss.

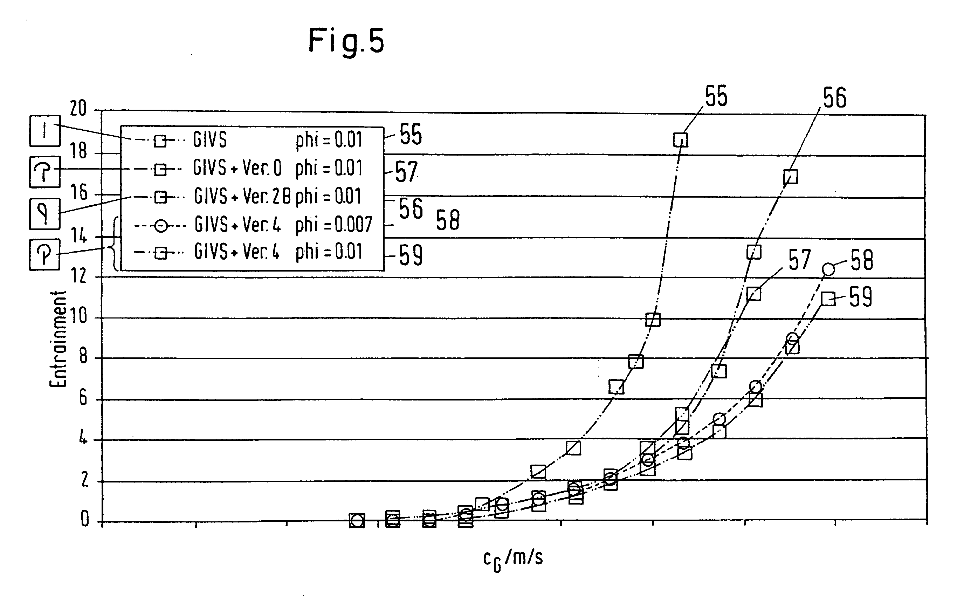

Fig. 5 zeigt ebenfalls den Anteil an mitgerissener Flüssigkeit (entrainment, E in %) für verschiedene Souders-Brown-Koeffizienten C_{G} in m/s. Die Kurve 55 zeigt wie die Kurve 50 den Anteil an mitgerissener Flüssigkeit für ein Leitelement ohne Auffangelement. Der Strömungsparameter hat für Kurve 50 gemäss Fig. 4 und für Kurve 55 gemäss Fig. 5 denselben Wert, daher betreffen die beiden Kurven dieselbe Messreihe. Die Kurve 57 wurde für ein Auffangelement gemäss dem Stand der Technik W02006122940, Fig. 7 (Bezugszeichen 121) gemessen. Der Kurve 56 liegt ein Leitelement mit einem Auffangelement zugrunde, welches gemäss W02006122940, Fig. 7 (Bezugszeichen 123) ähnlich Kurve 51 ausgestaltet ist, wobei allerdings zur Verbesserung der Flüssigkeitsabscheidung ein Abschnitt 24 angefügt wurde (siehe auch Darstellung in Fig. 5). Wie der Vergleich zwischen den Kurven 51 und 56 (beide bei einem Strömungsparameter phi von 0.01) zeigt, konnte durch diese Änderung der Geometrie tatsächlich eine Verbesserung erzielt werden. Tatsächlich ist die mitgerissene Flüssigkeitsmenge bei dieser Variante geringer als bei der einfacheren Variante der Kurve 51. Kurve 56 zeigt einen ähnlichen Anteil an mitgerissener Flüssigkeit bei gleicher Gasgeschwindigkeit wie die Variante gemäss Kurve 57. Allerdings verschlechtert sich der Druckverlust beträchtlich, sodass diese Variante nicht weiter vorfolgt worden ist. Es ist nach diesen Ergebnissen nicht zu erwarten, dass es weitere Varianten geben könnte, in denen bei gleichem oder vermindertem Druckverlust eine Verminderung des Anteils an mitgerissener Flüssigkeit möglich sein sollte. Beide Ausführungsformen der Kurven 56 und 57 wiesen schon eine sehr schmale Öffnung 16 zwischen dem Leitelement 2 und dem Auffangelement 15 auf, was die aufgefangene Flüssigkeit vor dem Wiedereintritt in den Hauptstrom schützt. Ausserdem brachte das Anbringen einer Vertiefung wie im Fall der Kurve 57 keine weitere Verbesserung mehr, obwohl dadurch ein erhöhtes Fassungsvermögen für abzuführende Flüssigkeit zu erwarten war.

Daher war es umso erstaunlicher, dass für die erfindungsgemässe Lösung tatsächlich ein gegenüber der Kurven 56 und 57 weiter verminderter Anteil an mitgerissener Flüssigkeit realisiert werden konnte, hierzu siehe auch Kurven 53, 54, 58 und 59, wobei der Druckverlust sich nicht oder nur unwesentlich gegenüber der mit Kurve 57 gezeigten Lösung erhöht.

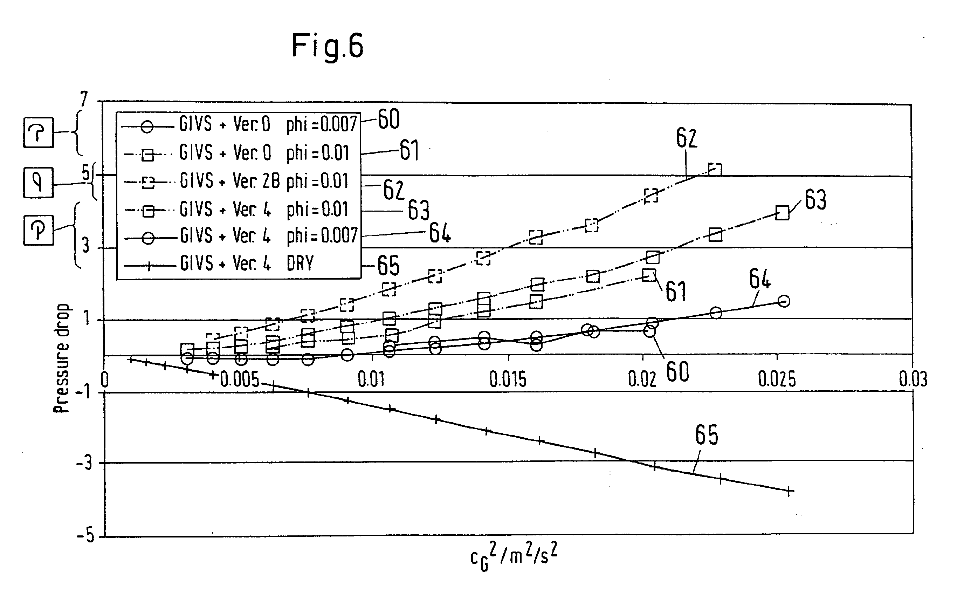

Fig. 6 zeigt den Druckverlust, welcher durch die Fluideintrittsvorrichtung erzeugt wird in Abhängigkeit des Wertes C_{G}² in m²/s², welcher dem Quadrat des Souders-Brown-Koeffizienten entspricht. Der gemessene Wert für den Druckverlust ist auf der y-Achse aufgetragen. Der Wert C_{G}² ist auf der x-Achse aufgetragen.

Der gemessene Druckverlust für ein Leitelement mit Auffangelement wie in W02006122940, Fig. 7 (Bezugszeichen 121) ist in Kurve 60 für einen Strömungsparameter phi von 0.007 angegeben. Kurve 61 wurde mit derselben Anordnung wie Kurve 60 gemessen, allerdings bei einem Strömungsparameter phi von 0.01. Hier zeigt sich, dass bei der Messung des Druckverlusts der Strömungsparameter einen deutlichen Einfluss auf den Druckverlust hat. Dies erklärt sich durch Impulsübertragung von der Gas- auf die Flüssigphase durch Reibung.

Kurve 62 zeigt wiederum den Druckverlust einer Lösung gemäss W02006122940, Fig. 7 (Bezugszeichen 123, jedoch um einen Abschnitt 24 ergänzt), der deutlich höher als der Druckverlust aller anderen Versionen ist,

Ein abnehmender Trend im Druckverlust ist im Vergleich der Kurven 63, 64 sowie 65 erkennbar. Kurven 63, 64 und 65 zeigen die Messwerte für den Druckverlust der erfindungsgemässen Lösung bei verschiedenen Strömungsparametern phi. Kurve 65 zeigt den Druckverlust für eine trockene Gasströmung. Hier nimmt der Druck sogar zu (negativer Druckverlust), weil die Gasströmung verzögert wird, was zur teilweisen Umwandlung der kinetischen Energie in statischen Druck führt. Bei den Kurven 64 und 63 wird dieser Vorteil mit zunehmender Flüssigkeitsbelastung durch die Reibung zwischen den Phasen wieder aufgehoben. Trotzdem liegt der Duckverlust gemäss Kurve 63 immer noch unterhalb des Druckverlusts gemäss Kurve 62, welcher derselbe Strömungsparameter phi von 0.01 zugrunde liegt.

Der Druckverlust der erfindungsgemässen Lösung liegt somit im wesentlichen im gleichen Bereich wie der Stand der Technik gemäss Kurve 60 oder 61, aber bei einer deutlichen Verminderung des Anteils an mitgerissener Flüssigkeit, wie Fig. 4 oder Fig. 5 verdeutlichen.

Fig. 7 zeigt noch einmal den Einfluss des Strömungsparameters phi auf den Anteil an mitgerissener Flüssigkeit (entrainment) relativ zur Gasgeschwindigkeit. Deutlich ist der Trend zu erkennen, dass bei Zunahme des Strömungsparameters phi von 0.007 (Kurve 67) auf 0.01 (Kurve 68) und weiter auf 0.013 (Kurve 69) und 0.03 (Kurve 70) für die erfindungsgemässe Lösung der Anteil an mitgerissener Flüssigkeit abnimmt, d.h. anteilsmässig mehr Flüssigkeit abgeschieden wird. Gründe dafür sind die begünstigte Koaleszenz bei grösserem Tropfenanteil und eine versuchsbedingte Zunahme der mittleren Tropfengrösse im Fluid 7. Grössere Tropfen werden leichter abgeschieden.

In jedem Fall ist deutlich, dass der Anteil an mitgerissener Flüssigkeit im Vergleich zum Stand der Technik, der mit Kurve 66 für einen Strömungsparameter phi von 0.01 abgebildet ist, für die erfindungsgemässe Lösung immer kleiner als der Anteil an mitgerissener Flüssigkeit nach der Lösung aus dem Stand der Technik ist.

Der Stoffaustauschapparat 4 umfasst eine Fluideintrittsvorrichtung 1 nach einem der vorhergehenden Ausführungsbeispiele. Insbesondere ist der Stoffaustauschapparat 4 als Destillationskolonne ausgebildet. Vorteilhafterweise kann die Fluideintrittsvorrichtung 1 nach einem der vorhergehenden Ausführungsbeispiele für einen unter Vakuum betriebenen Stoffaustauschapparat 4 zum Einsatz kommen.

## Patentansprüche

1. Fluideintrittsvorrichtung (1) für einen Stoffaustauschapparat (4), der einen von der Umgebung abgeschlossenen Innenraum (5) aufweist, umfassend einen Kanal (6) zur Förderung eines Fluids (7) in den Innenraum (5) des Stoffaustauschapparats (4), wobei das Fluid (7) ein Gas (8) und eine Flüssigkeit (9) enthält, wobei der Kanal (6) eine Mehrzahl von Leitelementen (2) umfasst, sodass mittels eines jeden Leitelements (2) ein Teilstrom (10) des Fluids (7) erzeugbar ist, der über das Leitelement (2) in den Innenraum (5) lenkbar ist, wobei das Leitelement (2) ein erstes Ende (11) umfasst, welches als ein Umlenkelement (3) ausgebildet ist, um den Teilstrom (10) des Fluids (7) aus dem Kanal abzuzweigen und ein zweites Ende (12) umfasst, welches gegenüberliegend zum ersten Ende (11) angeordnet ist, wobei der Teilstrom (10) des Fluids (7) vom ersten Ende (11) zum zweiten Ende (12) leitbar ist, das Leitelement (2) eine Luvseite (13) und eine Leeseite (14) aufweist, wobei am zweiten Ende (12) ein Auffangelement (15) vorgesehen ist, wobei das Auffangelement (15) derart um das zweite Ende (12) angeordnet ist, dass eine Öffnung (16) zwischen der Luvseite (13) und dem Auffangelement (15) ausgebildet ist, wobei an die Öffnung (16) ein bogenförmiger Abschnitt (17) anschliesst und an den bogenförmigen Abschnitt (17) ein Abschnitt (18), welcher auf der Leeseite (14) mit dem Leitelement (2) verbunden ist, **dadurch gekennzeichnet, dass** der Abschnitt (18) mit dem zweiten Ende (12) einen Winkel (19) einschliesst, der 30° bis 75° beträgt.

2. Fluideintrittsvorrichtung nach Anspruch 1, wobei der Winkel (19) 40° bis 60° beträgt.

3. Fluideintrittsvorrichtung nach einem der vorhergehenden Ansprüche, wobei das Leitelement eine Wandstärke (21) aufweist, wobei der bogenförmige Abschnitt (17) um das zweite Ende (12) des Leitelements (2) in einem Radius (73) verläuft, wobei der Radius (73) des bogenförmigen Abschnitts (17) maximal das 5-fache, vorzugsweise maximal das 3-fache der Wandstärke (21) beträgt.

4. Fluideintrittsvorrichtung nach einem der vorhergehenden Ansprüche, wobei der bogenförmige Abschnitt (17) eine Eintrittskante (72) aufweist, wobei zwischen der Eintrittskante (72) des bogenförmigen Abschnitts (17) und dem zweiten Ende (12) des Leitelements (2) ein Abstand (20) ausgebildet ist, der maximal das 3-fache der Wandstärke (21) des zweiten Endes (12), vorzugsweise maximal das einfache der Wandstärke (21) des zweiten Endes (12) beträgt.

5. Fluideintrittsvorrichtung nach einem der vorhergehenden Ansprüche, wobei das Auffangelement (15) mit dem Leitelement (2) entlang eines Verbindungsstücks (22) verbunden ist.

6. Fluideintrittsvorrichtung nach Anspruch 5, wobei zumindest durch den bogenförmigen Abschnitt (17) des Auffangelements (15) ein Hohlraum (23) ausgebildet ist, wobei das zweite Ende (12) sich über das Verbindungsstück (22) hinaus in den Hohlraum (23) erstreckt.

7. Fluideintrittsvorrichtung nach einem der vorhergehenden Ansprüche, wobei zwischen dem bogenförmigen Abschnitt (17) und der Öffnung (16) ein zweiter Abschnitt (24) angeordnet ist.

8. Fluideintrittsvorrichtung nach einem der vorhergehenden Ansprüche, wobei der Kanal (6) den Innenraum (5) in einen ersten Teilbereich (46) und einen zweiten Teilbereich (47) teilt.

9. Fluideintrittsvorrichtung nach einem der vorhergehenden Ansprüche, wobei der Kanal (6) ein Bodenelement (25), ein Deckenelement (26) sowie ein erstes und ein zweites Seitenelement (27, 28) aufweisen, wobei die Leitelemente (2) an zumindest einem der Seitenelemente (27, 28) angeordnet sind.

10. Fluideintrittsvorrichtung nach einem der vorhergehenden Ansprüche, wobei das zweite Ende (12) eine Aussenkante (29) aufweist, die mit der Längsachse (30) des Stoffaustauschapparats (4) einen spitzen Winkel (31) einschliesst.

11. Fluideintrittsvorrichtung nach einem der vorhergehenden Ansprüche, wobei das zweite Ende (12) ein erstes Teilende (32) und ein zweites Teilende (33) umfasst, wobei das erste Teilende (32) sich von einem ersten Teilendpunkt (34) zu einem zweiten Teilendpunkt (35) erstreckt und das zweite Teilende (33) sich von einem dritten Teilendpunkt (36) zu einem vierten Teilendpunkt (37) erstreckt, wobei sich zwischen dem zweiten Teilendpunkt (35) und dem dritten Teilendpunkt (36) eine Kante (38) erstreckt, sodass. zwischen dem ersten Teilendpunkt (34), dem zweiten Teilendpunkt (35) und dem dritten Teilendpunkt (36) ein Dreieck ausgebildet ist, wobei um das erste und zweite Teilende je ein Auffangelement (15, 45) angeordnet ist.

12. Fluideintrittsvorrichtung nach einem der vorhergehenden Ansprüche, wobei das Auffangelement (15, 45) durch ein Abdeckelement (49) verschliessbar ist.

13. Fluideintrittsvorrichtung nach einem der vorhergehenden Ansprüche, wobei das Deckenelement (26) eine nach oben umgebogene Seitenkante (71) umfasst.

14. Stoffaustauschapparat (4) umfassend eine Fluideintrittsvorrichtung (1) nach einem der vorhergehenden Ansprüche, welcher insbesondere als Destillationskolonne ausgebildet ist.

15. Verwendung der Fluideintrittsvorrichtung (1) nach einem der vorhergehenden Ansprüche für einen unter Vakuum betriebenen Stoffaustauschapparat (4).

## Claims

1. A fluid inlet device (1) for a mass transfer apparatus (4) which has an inner space (5) closed off from the environment, including a channel (6) for the conveying of a fluid (7) into the inner space (5) of the mass transfer apparatus (4), wherein the fluid (7) contains a gas (8) and a liquid (9), wherein the channel (6) includes a plurality of guiding elements (2) so that a part flow (10) of the fluid (7) can be produced by means of each guiding element (2) which can be guided into the inner space (5) via the guiding element (2), wherein the guiding element (2) includes a first end (11) which is made as a deflection element (3) to branch the part flow (10) of the fluid (7) out of the channel and a second end (12) which is arranged opposite the first end (11), wherein the part flow (10) of the fluid (7) flows from the first end (11) to the second end (12), said guiding element (2) having a luff side (13) and a lee side (14), wherein a catching element (15) is provided at the second end (12), wherein the catching element (15) is arranged around the second end (12) such that an opening (16) is formed between the luff side (13) and the catching element (15), wherein an arcuate section (17) adjoins the opening (16) and a section (18) which is connected to the guiding element (2) at the lee side (14) adjoins the arcuate section (17), **characterized in that** the section (18) includes an angle (19) with the second end (12) which angle amounts to 30° to 75°.

2. A fluid inlet device in accordance with claim 1, wherein the angle (19) amounts to 40° to 60°.

3. A fluid inlet device in accordance with any one of the preceding claims, wherein the guiding element (2) has a wall thickness (21), wherein the arcuate section (17) extends around the second end (12) of the guiding element (2) in a radius (73), wherein the radius (73) of the arcuate section (17) amounts to a maximum of 5 times, preferably a maximum of 3 times, the wall thickness (21).

4. A fluid inlet device in accordance with any one of the preceding claims, wherein the arcuate section (17) has an inlet edge (72), wherein a spacing (20) is formed between the inlet edge (72) of the arcuate section (17) and the second end (12) of the guiding element (2), said spacing having at a maximum 3 times the wall thickness (21) of the second end (12), preferably a maximum of one times the wall thickness (21) of the second end (12).

5. A fluid inlet device in accordance with any one of the preceding claims, wherein the catching element (15) is connected to the guiding element (2) along a connection piece (22).

6. A fluid inlet device in accordance with claim 5, wherein a hollow space (23) is formed at least by the arcuate section (17) of the catching element (15), wherein the second end (12) extends beyond the connection piece (22) into the hollow space (23).

7. A fluid inlet device in accordance with any one of the preceding claims, wherein a second section (24) is arranged between the arcuate section (17) and the opening (16).

8. A fluid inlet device in accordance with any one of the preceding claims, wherein the channel (6) divides the inner space (5) into a first part region (46) and a second part region (47).

9. A fluid inlet device in accordance with any one of the preceding claims, wherein the channel (6) has a base element (25), a top element (26) and a first and a second side element (27, 28), wherein the guiding elements (2) are arranged at at least one of the side elements (27, 28).

10. A fluid inlet device in accordance with any one of the preceding claims, wherein the second end (12) has an outer edge (29) which includes an acute angle (31) with the longitudinal axis (30) of the mass transfer apparatus (4).

11. A fluid inlet device in accordance with any one of the preceding claims, wherein the second end (12) includes a first part end (32) and a second part end (33), wherein the first part end (32) extends from a first part end point (34) to a second part end point (35) and the second part end (33) extends from a third part end point (36) to a fourth part end point (37), wherein an edge (38) extends between the second part end point (35) and the third part end point (36) so that a triangle is formed between the first part end point (34), the second part end point (35) and the third part end point (36), wherein a respective catching element (15, 45) is arranged around the first and second part ends.

12. A fluid inlet device in accordance with any one of the preceding claims, wherein the catching element (15, 45) is closable by a cover element (49).

13. A fluid inlet device in accordance with any one of the preceding claims, wherein the top element (26) includes an upwardly curved side edge (71).

14. A mass transfer apparatus (4) including a fluid inlet device (1) in accordance with any one of the preceding claims which is in particular made as a distillation column.

15. Use of the fluid inlet device (1) in accordance with any one of the preceding claims for a mass transfer apparatus (4) operated under vacuum.

## Revendications

1. Dispositif d'entrée de fluide (1) pour un appareil d'échange de matière (4), qui présente un espace intérieur (5) fermé relativement à l'environnement, comprenant un canal (6) pour le convoyage d'un fluide (7) dans l'espace intérieur (5) de l'appareil d'échange de matière (4), où le fluide (7) contient un gaz (8) et un liquide (9), où le canal (6) comprend une pluralité d'éléments de conduction (2) de sorte qu'au moyen de chaque élément de conduction (2), un écoulement partiel (10) du fluide (7) peut être produit, qui peut être guidé par l'élément de conduction (2) dans l'espace intérieur (5), où l'élément de conduction (2) comprend une première extrémité (11), qui est réalisée comme élément de renvoi (3), pour dériver l'écoulement partiel (10) du fluide (7) du canal, et comprend une seconde extrémité (12) qui est disposée d'une manière opposée à la première extrémité (11), où l'écoulement partiel (10) du fluide (7) peut être guidé de la première extrémité (11) vers la seconde extrémité (12), l'élément de conduction (2) présente un côté du vent (13) et un côté sous le vent (14), où est prévu à la seconde extrémité (12) un élément collecteur (15), où l'élément collecteur (15) est disposé de telle sorte autour de la seconde extrémité (12) qu'une ouverture (16) est réalisée entre le côté du vent (13) et l'élément collecteur (15), où fait suite à l'ouverture (16) une section en forme d'arc (17) et, à la section en forme d'arc (17) une section (18) qui est reliée au côté sous le vent (14) à l'élément de conduction (2), **caractérisé en ce que** la section (18) forme avec la seconde extrémité (12) un angle (19) qui est de 30° à 75°.

2. Dispositif d'entrée de fluide selon la revendication 1, où l'angle (19) est de 40° à 60°.

3. Dispositif d'entrée de fluide selon l'une des revendications précédentes, dans lequel l'élément de conduction présente une épaisseur de paroi (21), où la section en forme d'arc (17) s'étend autour de la seconde extrémité (12) de l'élément de conduction (2) selon un rayon (73), où le rayon (73) de la section en forme d'arc (17) représente au maximum cinq fois, de préférence au maximum trois fois l'épaisseur de paroi (21).

4. Dispositif d'entrée de fluide selon l'une des revendications précédentes, où la section en forme d'arc (17) présente une arête d'entrée (72), où est réalisé entre l'arête d'entrée (72) de la section en forme d'arc (17) et la seconde extrémité (12) de l'élément de conduction (2) un écart (20) qui représente au maximum trois fois l'épaisseur de paroi (21) de la seconde extrémité (12), de préférence au maximum une fois l'épaisseur de paroi (21) de la seconde extrémité (12).

5. Dispositif d'entrée de fluide selon l'une des revendications précédentes, où l'élément collecteur (15) est relié à l'élément de conduction (2) le long d'une pièce de liaison (22).

6. Dispositif d'entrée de fluide selon la revendication 5, où au moins par la section en forme d'arc (17) de l'élément collecteur (15), un espace creux (23) est formé, où la seconde extrémité (12) s'étend au-delà de la pièce de liaison (22) dans l'espace creux (23).

7. Dispositif d'entrée de fluide selon l'une des revendications précédentes, où est disposé entre la section en forme d'arc (17) et l'ouverture (16) une deuxième section (24).

8. Dispositif d'entrée de fluide selon l'une des revendications précédentes, où le canal (6) divise l'espace intérieur (5) en une première zone partielle (46) et une deuxième zone partielle (47).

9. Dispositif d'entrée de fluide selon l'une des revendications précédentes, où le canal (6) présente un élément de fond (25), un élément de plafond (26) ainsi qu'un premier et un deuxième élément latéral (27, 28), où les éléments de conduction (2) sont disposés à au moins un des éléments latéraux (27, 28).

10. Dispositif d'entrée de fluide selon l'une des revendications précédentes, où la seconde extrémité (12) présente une arête extérieure (29) qui forme avec l'axe longitudinal (30) de l'appareil d'échange de matière (4) un angle aigu (31).

11. Dispositif d'entrée de fluide selon l'une des revendications précédentes, où la seconde extrémité (12) comprend une première extrémité partielle (32) et une seconde extrémité partielle (33), où la première extrémité partielle (32) s'étend d'un premier point d'extrémité partielle (34) à un second point d'extrémité partielle (35), et la seconde extrémité partielle (33) s'étend d'un troisième point d'extrémité partielle (36) à un quatrième point d'extrémité partielle (37), où s'étend entre le deuxième point d'extrémité partielle (35) et le troisième point d'extrémité partielle (36) une arête (38) de sorte qu'il est réalisé entre le premier point d'extrémité partielle (34), le deuxième point d'extrémité partielle (35) et le troisième point d'extrémité partielle (36) un triangle, où est disposé autour de la première et de la deuxième extrémité partielle à chaque fois un élément de collecte (15, 45).

12. Dispositif d'entrée de fluide selon l'une des revendications précédentes, où l'élément de collecte (15, 45) peut être fermé par un élément de recouvrement (49).

13. Dispositif d'entrée de fluide selon l'une des revendications précédentes, où l'élément de plafond (26) présente une arête latérale (71) courbée vers le haut.

14. Appareil d'échange de matière (4) comprenant un dispositif d'entrée de fluide (1) selon l'une des revendications précédentes, qui est réalisé en particulier comme colonne de distillation.

15. Utilisation du dispositif d'entrée de fluide (1) selon l'une des revendications précédentes pour un appareil d'échange de matière (4) fonctionnant sous vide.
